# EUROPEAN PATENT SPECIFICATION

(11) **EP 3 418 848 B1**
(45) Date of publication and mention of the grant of the patent: **26.05.2021**
(21) Application number: 17177358.3
(22) Date of filing: 22.06.2017
(51) Int. Cl.: G05D 23/13, F16K 17/00

(54) **THERMOSTATIC MIXING VALVE**
THERMOSTATISCHES MISCHVENTIL
MITIGEUR THERMOSTATIQUE

(43) Date of publication of application: 26.12.2018
(73) Proprietor: Caleffi S.p.A., 28010 Fontaneto d'Agogna, Novara (IT)
(72) Inventor: CALEFFI, Marco, 28010 Fontaneto d'Agogna (IT)
(74) Representative: Siniscalco, Fabio

(56) References cited:
- WO-A1-2005/026597
- GB-A- 2 270 139
- US-A- 2 268 359
- US-A1- 2013 099 007
- US-B1- 6 315 210

## Description

### BACKGROUND OF THE INVENTION

The object of the present invention is a valve to be applied to hot water storage installations for controlling the temperature of the discharge water. Such a valve is for example disclosed in document GB 2 270 139 A.

### STATE OF THE ART

Hot water storage installations are known that normally have a hot water storage tank. The storage tank can be provided with a source of heat, for example an electric resistance, to heat the water. The storage tank can be alternatively supplied with hot water from a separate boiler or from external solar collectors and can be provided with a hot water compensating or producing electric resistance.

These installations provide, for example, domestic sanitary hot water.

In order to prevent the temperature of the hot water exceeding a set value inside the storage tank, a relief valve is provided that is sensitive to temperature and pressure. When the temperature or the pressure in the tank exceed the set value the relief valve opens in such a manner as to permit discharging of the high temperature water to the outside along a discharge pipe.

Normally, the relief valve opens when the water in the storage tank has a temperature above 90°C, or a temperature near the boiling temperature of water.

This high temperature of the water necessitates making the discharge pipe of metal and in particular copper.

Making the discharge pipe of copper entails high costs, both because of the cost of the copper and because of the cost of manufacturing the conduit, which entails operations of folding and welding the pipe.

It must also be added that discharging water to the outside at such temperatures can in itself be dangerous.

### OBJECT OF THE INVENTION

The object of the present invention is to propose a discharge water temperature control valve for hot water storage installations that is able to overcome the aforesaid drawbacks.

### SHORT DESCRIPTION OF THE INVENTION

This object is achieved by a temperature control valve according to claim 1.

GB2270139A refers to the preamble of claim 1.

### SHORT DESCRIPTION OF THE DRAWINGS

In order to better understand the invention, a description is given below of a nonlimiting exemplary embodiment thereof, illustrated in the attached drawings, in which:
fig. 1 is a schematic view of an installation for residential use for producing hot water with a storage tank, provided with a temperature control valve according to the invention;
fig. 2 is a section view according to the line II-II of fig. 3 of the aforesaid valve;
fig. 3 is a bottom plan view of the aforesaid valve;
fig. 4 is an exploded perspective view of the aforesaid valve;
fig. 5 is an exploded perspective view of the aforesaid valve on the opposite side to fig. 4.

### DETAILED DESCRIPTION OF THE INVENTION

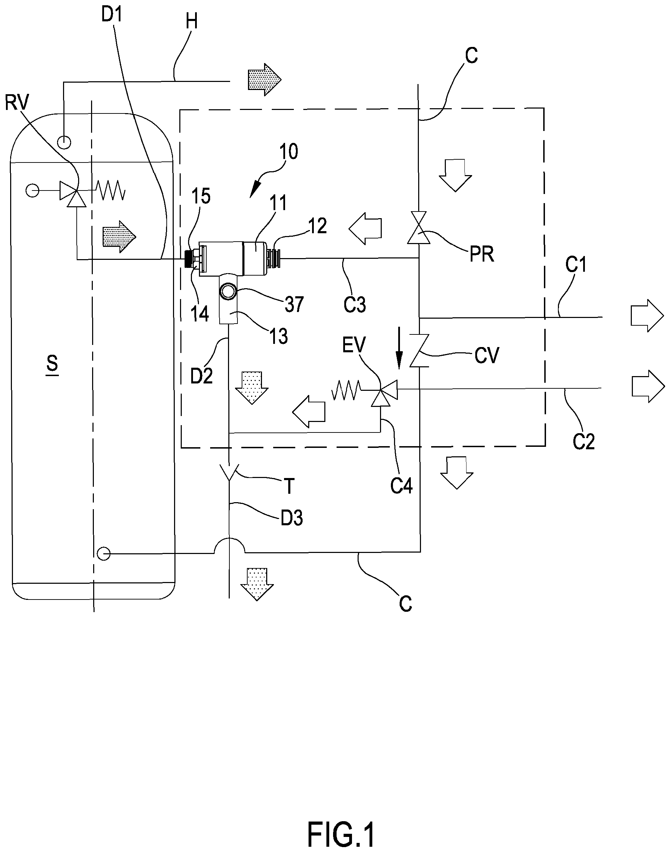

The installation illustrated in fig.1 is designed to produce domestic sanitary hot water.

The installation has a hot water storage tank S connected on the lower part to a cold water inlet pipe C and on the upper part to a hot water outlet pipe H for the users.

The storage tank S can be provided with a heat source, for example an electric resistance, to heat the water. The storage tank S can be alternatively supplied with hot water from a separate boiler or from external solar collectors and can be provided with a hot water compensating or producing electric resistance.

Along the cold water feeding pipe C, a pressure reducer PR and a check valve CV are arranged. From the pipe C a pipe C1 branches off to supply cold water to the users and a pipe C2 branches off that is connected to an expansion tank and to a pressure gauge that are not illustrated.

To the tank S a hot water discharge pipe is also connected on the upper part, which is divided into three subsequent sections D1, D2, D3.

Along the section D1, a relief valve RV is arranged that is sensitive to temperature and pressure.

Downstream of the relief valve RV, a temperature control valve 10 is arranged along the discharge pipe. The valve 10 is also connected to the cold water feeding pipe C through a pipe C3.

The cold water feeding pipe C is also connected to the section of discharge pipe D2 through a pipe C4 also connected to the pipe C2 through an expansion valve EV.

Between the sections of discharge pipe D2 and D3 a funnel T is arranged.

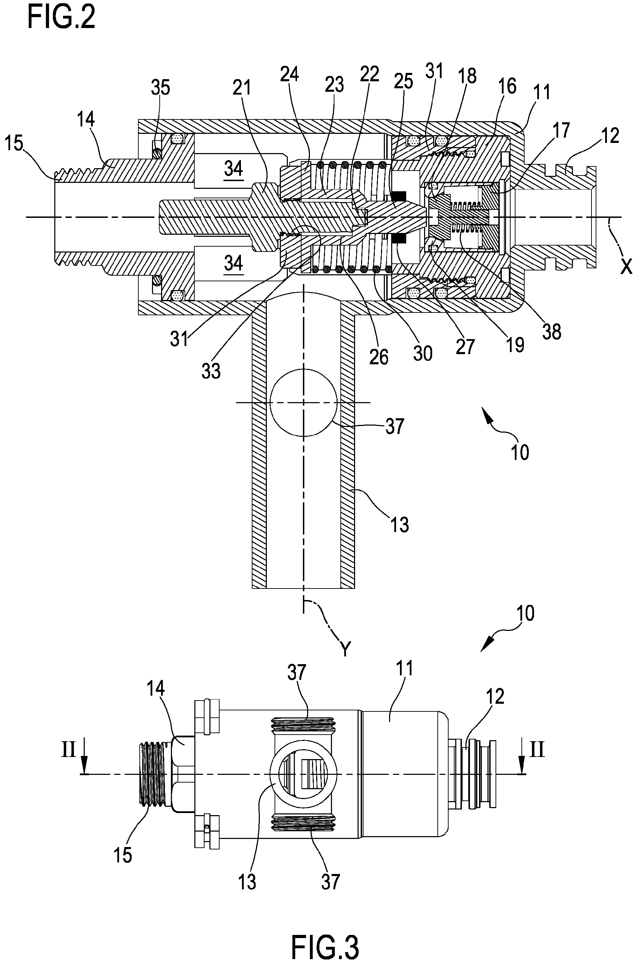

With reference to figs 2-5, the valve 10 comprises a T-shaped hollow valve body 11. On one wing of the T a connecting nozzle 12 is made as one piece and the leg of the T is formed by a conduit 13 that is also made as one piece with the body 11. On the other wing of the T a connecting element 14 is provided in which a threaded connecting nozzle 15 is made as one piece.

In the valve body 11, a bush 16 is received that is arranged at the connecting nozzle 12.

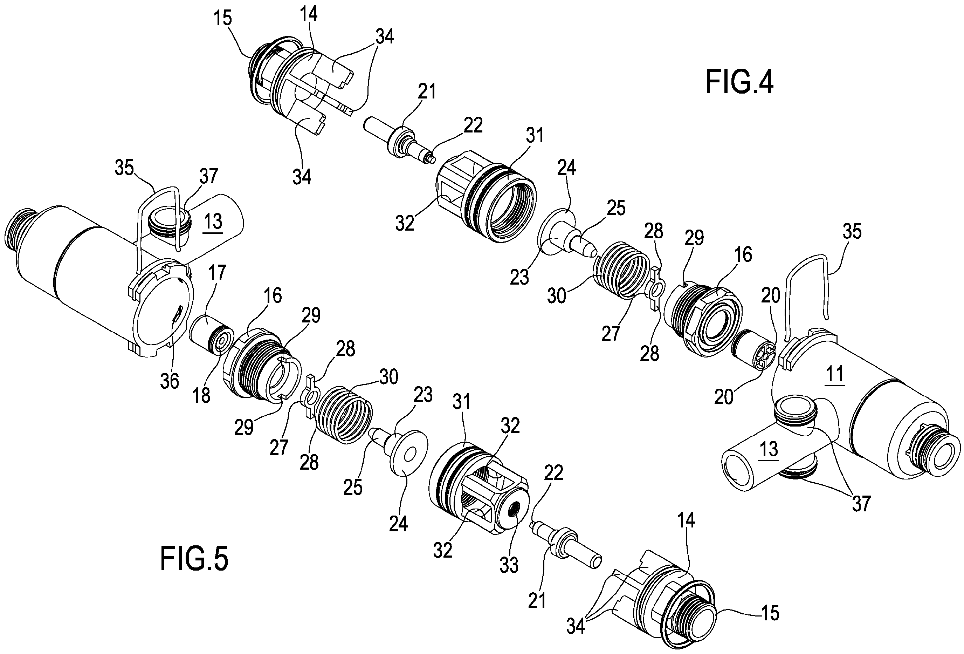

In the bush 16, a cylindrical non-return valve device 17 is received, having internally a movable shutter 18 that acts on an inner seat 19 of the device 17. Inside the valve device 17, some longitudinal passages 20 are obtained (fig. 4) that make the nozzle 12 communicating with the inner seat 19 of the valve device 17. The shutter 18 is normally kept shut by a coil spring 38.

In the valve body 11 a wax thermosensitive actuating device 21 is also fixed that is of elongated shape with a tip 22 that lengthens or shortens according to temperature.

The actuating device 21 acts on the shutter 18 to open or close the shutter 18 through a thrust element 23 formed by a disc-shaped base 24 and by a tip 25 that comes into contact with the shutter 18. The thrust element 23 has an inner seat 26 in which a portion of the actuating device 21 is received, the tip 22 of which engages the seat 26 in a shapingly receiving manner. A guide ring 27 is provided in which the tip 25 is slidingly received. The guide ring 27 is provided with two arms 28 (figs 4,5) that extend from the ring 27 in opposite directions and engage in two corresponding notches 29 obtained in the bush 16.

Between the bush 16 and the disc-shaped base 24 of the thrust element 23, a coil spring 30 is received that acts in an opposite direction to the lengthening driving direction of the actuating device 21 or tends to maintain the shutter 18 in the closed position.

The thrust element 23 and the spring 30 are received in a cage 31 that is screwed onto the bush 16. The cage 31 has a series of perimeter windows 32 (figs 4,5) that make the inside of the cage communicate with the outside of the cage. Further, the cage 31 has a hole 33 into which the actuating device 21 is screwed.

The cage 31 is locked in position by the connecting element 14 through wings 34 that extend as one piece from the connecting element 14.

The connecting element 14 is secured to the valve body 11 by a fork 35 that is inserted into suitable holes 36 obtained in the body 11. The fork 35 locks the connecting element 14 inside the valve body 11 so that also the cage 31 is locked.

The connecting nozzle 12, the connecting element 14, the bush 16, the shutter 18, the actuating device 21, the thrust element 23, the coil spring 30, and the cage 31 are all arranged around the same axis X as the valve body 11. The conduit 13 is arranged along an axis Y that is perpendicular to the axis X.

Along the conduit 13, two further opposite threaded connecting nozzles 37 are provided. One of the two nozzles 37 can be connected to a safety valve, for example the expansion valve EV of fig.1, whereas the other is closed by a cap.

Seal washers which are not disclosed here in detail are provided between the various components disclosed above.

With reference to fig.1, the nozzle 12 of the valve 10 is connected to the cold water feeding pipe C3, the nozzle 15 is connected to the section of discharge pipe D1 and the conduit 13 is connected to the section of discharge pipe D2.

The operation of the control valve 10 in the context of the disclosed and illustrated installation is as follows.

When the temperature or the pressure in the tank S exceed a set value, the relief valve RV opens so as to permit the high temperature water to discharge outside along the discharge section D1 of the discharge pipe.

The high temperature water enters the valve 10 through the connecting nozzle 15 and reaches the thermosensitive actuating device 21.

Until the temperature of the high temperature water coming from the tank S does not exceed a set temperature value there is an inert condition, or this water passes through the valve 10, exiting the conduit 13, and is discharged outside through the discharge sections D2 and D3 of the discharge pipe.

When the temperature of the high temperature water coming from the tank S exceeds the set temperature value the tip 22 of the thermosensitive actuating device 21 extends and pushes the shutter 18 open, enabling the cold water coming from the connecting nozzle 12 to enter the cage 31, to pass through the windows 32 of the cage 31, and then to mix with the high temperature water, decreasing the temperature thereof.

The greater the temperature of the water coming from the tank S, the greater will be the expansion of the thermosensitive actuating device 21 or the greater will be the extending of the tip 22 of the device 21 and thus the opening of the shutter 18, with consequent increase of the flow of cold water.

For example, supposing a set temperature value of 90°C:
- if the temperature of the water coming from the tank S exceeds this set value by 5°C the shutter 18 opens by 10% of maximum opening stroke,
- if the temperature of the water coming from the tank S exceeds this set value by 10°C the shutter 18 opens by 50% of maximum opening stroke,
- if the temperature of the water coming from the tank S exceeds this set value by 20°C the shutter 18 opens by 100% of maximum opening stroke.

When the temperature of the water falls below the set value the tip 22 of the thermosensitive actuating device contracts, favoured also by the action of the spring 30, and the shutter 18 returns to the closed position through the effect of the pressure of the cold water and through the effect of the spring 38.

The disclosed and illustrated valve 10 has many advantages.

First of all, as the discharge water is always maintained below a certain set temperature value, there is no need to make the discharge pipe of metal but it can be made of plastics, with clear savings in terms of installation cost.

In addition, there is the certainty that the discharge water is always below a certain temperature, decreasing the hazards linked to a discharge to the outside of water at a high temperature.

The configuration of the valve 10 enables one or more of the components thereof to be replaced rapidly. In fact, it is sufficient to remove the fork 35 and extract the connecting element 14 to then be able to remove the other components to replace one or more thereof, as can be well understood by observing the exploded perspective views of the figs 4,5.

The cage 31 in which the thermosensitive actuating device 21 is partially contained enables the cold water to flow continuously and regularly on both the section of the device 21 inside the cage 31 and on the section of the device 21 outside the cage 31, enabling the device to react rapidly.

The passage section of the high temperature water through the valve 10 never varies according to the temperature, always permitting an effective discharge, unlike what happens in normal mixers.

## Claims

1. Discharge water temperature control valve (10) for hot water storage installations in which the temperature control valve is suitable for being installed along a high temperature discharge pipe downstream of a relief valve, comprising a valve body (11) having a first inlet (12) suitable for being connected to a cold water supply pipe, a second inlet (15) suitable for being connected to the discharge pipe downstream of the relief valve, and an outlet (13) for discharging water from the valve, wherein in the valve body (11) a non-return valve device (17) is housed at the first inlet (12) that in the closed position prevents the cold water entering, and a thermosensitive actuating device (21) is further housed in the valve body (11), **characterised in that** the actuating device (21) is arranged along a path of the high temperature discharge water inside the valve body (11) between the second inlet (15) and the outlet (13), wherein the actuating device (21) expands and reduces according to the temperature and is connected to the non-return valve device (17) to place the non-return valve device (17) in the open position when the temperature of the discharge water exceeds a set value, wherein the non-return valve device (17) has a shutter (18) that is maintained in the closed position elastically and through the effect of the pressure of the cold water, and the actuating device (21) acts on the shutter (18), pushing the shutter (18) open when the high temperature of the discharge water exceeds the set value.

2. Control valve according to claim 1, wherein the actuating device (21) is partially received in a cage (31) with windows (32) for the passage of the cold water from the inside to the outside of the cage (31) so as to reach all the actuating device (21).

3. Control valve according to claim 2, wherein the actuating device (21) acts on the shutter (18) through a thrust element (23) on which a spring (30) acts in a direction opposite the thrust exerted by the thrust element (23) on the shutter (18).

4. Control valve according to claim 3, wherein the first inlet (12), the second inlet (15), the non-return valve device (17), the thrust element (23), the spring (30), and the cage (31) are arranged along the same axis (X) of the valve body (11).

5. Control valve according to claim 4, wherein the outlet (13) is arranged along an axis (Y) that is perpendicular to the aforesaid axis (X).

6. Control valve according to claim 4, wherein the second inlet (15) consists of a connecting element (14) removably fixed to the valve body (11).

7. Control valve according to claim 6, wherein the connecting element (14) is removably fixed to the valve body (11) by a fork (35) that is removably inserted into holes (36) of the valve body (11).

8. Hot water storage installation comprising a hot water storage tank (S) and comprising a high temperature water discharge pipe (D1,D2,D3) controlled by a relief valve (RV) that is sensitive to temperature and pressure, wherein downstream of the relief valve (RV) a temperature control valve (10) is arranged according to any one of claims 1-7.

## Patentansprüche

1. Ablaufwasser-Temperatursteuerventil (10) für Warmwasserspeicheranlagen, in denen das Temperatursteuerventil dazu geeignet ist, entlang eines Hochtemperatur-Ablaufrohrs stromabwärts eines Überdruckventils installiert zu werden, umfassend einen Ventilkörper (11) mit einem ersten Einlass (12), der dazu geeignet ist, mit einem Kaltwasser-Zuführrohr verbunden zu werden, einen zweiten Einlass (15), der dazu geeignet ist, mit dem Ablaufrohr stromabwärts des Überdruckventils verbunden zu werden, und einen Auslass (13) zum Abführen von Wasser aus dem Ventil, wobei in dem Ventilkörper (11) eine Rückschlagventilvorrichtung (17) an dem ersten Einlass (12) untergebracht ist, die in der geschlossenen Position den Eintritt von kaltem Wasser verhindert, und weiter eine wärmeempfindliche Betätigungsvorrichtung (21) in dem Ventilkörper (11) untergebracht ist, **dadurch gekennzeichnet, dass** die Betätigungsvorrichtung (21) entlang eines Pfades des Hochtemperatur-Ablaufwassers innerhalb des Ventilkörpers (11) zwischen dem zweiten Einlass (15) und dem Auslass (13) angeordnet ist, wobei die Betätigungsvorrichtung (21) sich entsprechend der Temperatur ausdehnt und verringert und mit der Rückschlagventilvorrichtung (17) verbunden ist, um die Rückschlagventilvorrichtung (17) in die offene Position zu bringen, wenn die Temperatur des Ablaufwassers einen Sollwert überschreitet, wobei die Rückschlagventileinrichtung (17) einen Verschluss (18) aufweist, der elastisch und durch die Wirkung des Drucks des kalten Wassers in der geschlossenen Position gehalten wird, und die Betätigungsvorrichtung (21) auf den Verschluss (18) einwirkt, indem sie den Verschluss (18) aufschiebt, wenn die hohe Temperatur des Ablaufwassers den Sollwert überschreitet.

2. Steuerventil nach Anspruch 1, wobei die Betätigungsvorrichtung (21) teilweise in einem Käfig (31) mit Fenstern (32) für den Durchlass des kalten Wassers von innen nach außen des Käfigs (31) aufgenommen ist, um die gesamte Betätigungsvorrichtung (21) zu erreichen.

3. Steuerventil nach Anspruch 2, wobei die Betätigungsvorrichtung (21) über ein Schubelement (23) auf den Verschluss (18) wirkt, auf das eine Feder (30) in einer Richtung wirkt, die dem vom Schubelement (23) auf den Verschluss (18) ausgeübten Schub entgegengesetzt ist.

4. Steuerventil nach Anspruch 3, wobei der erste Einlass (12), der zweite Einlass (15), die Rückschlagventilvorrichtung (17), das Schubelement (23), die Feder (30) und der Käfig (31) entlang der gleichen Achse (X) des Ventilkörpers (11) angeordnet sind.

5. Steuerventil nach Anspruch 4, wobei der Auslass (13) entlang einer Achse (Y) angeordnet ist, die senkrecht zu der Achse (X) steht.

6. Steuerventil nach Anspruch 4, wobei der zweite Einlass (15) aus einem Verbindungselement (14) besteht, das lösbar mit dem Ventilkörper (11) verbunden ist.

7. Steuerventil nach Anspruch 6, wobei das Verbindungselement (14) durch eine Gabel (35), die lösbar in Bohrungen (36) des Ventilkörpers (11) eingesetzt ist, lösbar am Ventilkörper (11) befestigt ist.

8. Warmwasserspeicheranlage, die einen Warmwasserspeichertank (S) umfasst und ein Hochtemperatur-Wasserablaufrohr (D1, D2, D3) umfasst, die durch ein Überdruckventil (RV) gesteuert wird, das temperatur- und druckempfindlich ist, wobei stromabwärts des Überdruckventils (RV) ein Temperatursteuerventil (10) nach einem der Ansprüche 1-7 angeordnet ist.

## Revendications

1. Vanne de commande de température d'eau de décharge (10) pour des installations de stockage d'eau chaude où la vanne de commande de température est adaptée pour être installée le long d'un tuyau de décharge à haute température en aval d'une vanne de décharge, comprenant un corps de vanne (11) ayant une première entrée (12) adaptée pour être connectée à un tuyau d'alimentation en eau froide, une seconde entrée (15) adaptée pour être connectée au tuyau de décharge en aval de la vanne de décharge, et une sortie (13) pour décharger de l'eau à partir de la vanne, dans laquelle dans le corps de vanne (11), un dispositif de clapet anti-retour (17) est logé au niveau de la première entrée (12) qui, dans la position fermée, empêche l'entrée d'eau froide, et un dispositif d'actionnement thermosensible (21) est en outre logé dans le corps de vanne (11), **caractérisée en ce que** le dispositif d'actionnement (21) est agencé le long d'un trajet de l'eau de décharge à haute température à l'intérieur du corps de vanne (11) entre la seconde entrée (15) et la sortie (13), dans laquelle le dispositif d'actionnement (21) se dilate et se réduit selon la température et est connecté au dispositif de clapet anti-retour (17) pour placer le dispositif de clapet anti-retour (17) dans la position ouverte lorsque la température de l'eau de décharge dépasse une valeur de consigne, dans laquelle le dispositif de clapet anti-retour (17) présente un obturateur (18) qui est maintenu dans la position fermée élastiquement et sous l'effet de la pression de l'eau froide, et le dispositif d'actionnement (21) agit sur l'obturateur (18), en poussant l'obturateur (18) à s'ouvrir lorsque la haute température de l'eau de décharge dépasse la valeur de consigne.

2. Vanne de commande selon la revendication 1, dans laquelle le dispositif d'actionnement (21) est partiellement reçu dans une cage (31) avec des fenêtres (32) pour le passage de l'eau froide de l'intérieur vers l'extérieur de la cage (31) de manière à atteindre la totalité du dispositif d'actionnement (21).

3. Vanne de commande selon la revendication 2, dans laquelle le dispositif d'actionnement (21) agit sur l'obturateur (18) par l'intermédiaire d'un élément de poussée (23) sur lequel un ressort (30) agit dans une direction opposée à la poussée exercée par l'élément de poussée (23) sur l'obturateur (18).

4. Vanne de commande selon la revendication 3, dans laquelle la première entrée (12), la seconde entrée (15), le dispositif de clapet anti-retour (17), l'élément de poussée (23), le ressort (30), et la cage (31) sont agencés le long du même axe (X) du corps de vanne (11).

5. Vanne de commande selon la revendication 4, dans laquelle la sortie (13) est agencée le long d'un axe (Y) perpendiculaire à l'axe (X) mentionné ci-dessus.

6. Vanne de commande selon la revendication 4, dans laquelle la seconde entrée (15) est constituée d'un élément de connexion (14) fixé de manière amovible au corps de vanne (11).

7. Vanne de commande selon la revendication 6, dans laquelle l'élément de connexion (14) est fixé de manière amovible au corps de vanne (11) par une fourche (35) qui est insérée de manière amovible dans des orifices (36) du corps de vanne (11).

8. Installation de stockage d'eau chaude comprenant un réservoir de stockage d'eau chaude (S) et comprenant une conduite de décharge d'eau à haute température (D1, D2, D3) commandée par une vanne de décharge (RV) qui est sensible à une température et à une pression, dans laquelle en aval de la vanne de décharge (RV), une vanne de commande de température (10) est agencée selon l'une quelconque des revendications 1 à 7.
